# EUROPÄISCHE PATENTSCHRIFT

(11) **EP 2 072 165 B1**
(45) Veröffentlichungstag und Bekanntmachung des Hinweises auf die Patenterteilung: **17.04.2013**
(21) Anmeldenummer: 08021831.6
(22) Anmeldetag: 16.12.2008
(51) Int. Cl.: B23D 49/16, B23D 49/10

(54) **Stichsäge**
Jig saw
Scie sauteuse

(30) Priorität: 18.12.2007 DE 102007060815
(43) Veröffentlichungstag der Anmeldung: 24.06.2009
(73) Patentinhaber: Mafell AG, 78727 Oberndorf a.N. (DE)
(72) Erfinder: Bantle, Ralf, 78662 Bösingen (DE); Götz, Albert, 72160 Horb a.N. (DE); Hermle, Hans, 78661 Dietingen (DE)
(74) Vertreter: Manitz, Finsterwald & Partner GbR

(56) Entgegenhaltungen:
- EP-A1- 1 518 629
- EP-A2- 1 325 790
- DE-A1- 2 235 862
- DE-A1- 10 023 081
- GB-A- 807 134
- US-A- 3 971 132
- US-A1- 2005 262 708
- US-A1- 2006 096 104

## Beschreibung

Die Erfindung betrifft eine Stichsäge gemäß dem Oberbegriff des Anspruchs 1, mit einem Sägeblatt und einer Pendelhubsteuerung für das Sägeblatt, die einen Stößel für die Hubbewegung und einen Pendelerreger für die Pendelbewegung des Sägeblatts umfasst.

Derartige Stichsägen sind grundsätzlich bekannt. Beispielsweise geht eine derartige Stichsäge aus der DE 10023081 A1 hervor. In dem Bemühen, möglichst gute Sägeergebnisse zu erzielen, ist bislang eine Vielzahl von Maßnahmen vorgeschlagen worden, die stets darauf abzielen, das Sägeblatt in seinem unteren Bereich zu führen bzw. zu stabilisieren. Zu diesem Zweck wurde meist der stets unmittelbar am Sägeblatt angreifende Pendelerreger genutzt. Dem unteren Bereich des Sägeblatts wurde also hinsichtlich Führung bzw. Stabilisierung große Aufmerksamkeit gewidmet, während im oberen Bereich das Sägeblatt bislang nur relativ lose bzw. mit Spiel behaftet formschlüssig am Stößel gehalten wurde.

Trotz der getroffenen Maßnahmen zeigt sich in der Praxis, dass die mit derartigen im unteren Bereich geführten bzw. stabilisierten Sägeblättern erzielten Sägeergebnisse nicht immer zufrieden stellend sind.

Die DE 100 23 081 A1 offenbart eine Haltevorrichtung für den Stößel einer elektrischen Stichsäge, bei welcher der Stößelmechanismus gegenüber dem Sägengehäuse durch einen Gummistopfen abgedichtet ist.

In der US 2006/0096104 A1 ist eine elektrische Säge offenbart, deren Sägeblatt mehrere unterschiedliche Bewegungen ausführen kann, zum Beispiel eine rein lineare Hubbewegung, eine Orbitalbewegung und eine Wippbewegung. Der Antrieb erfolgt über einen Taumelscheibenmechanismus.

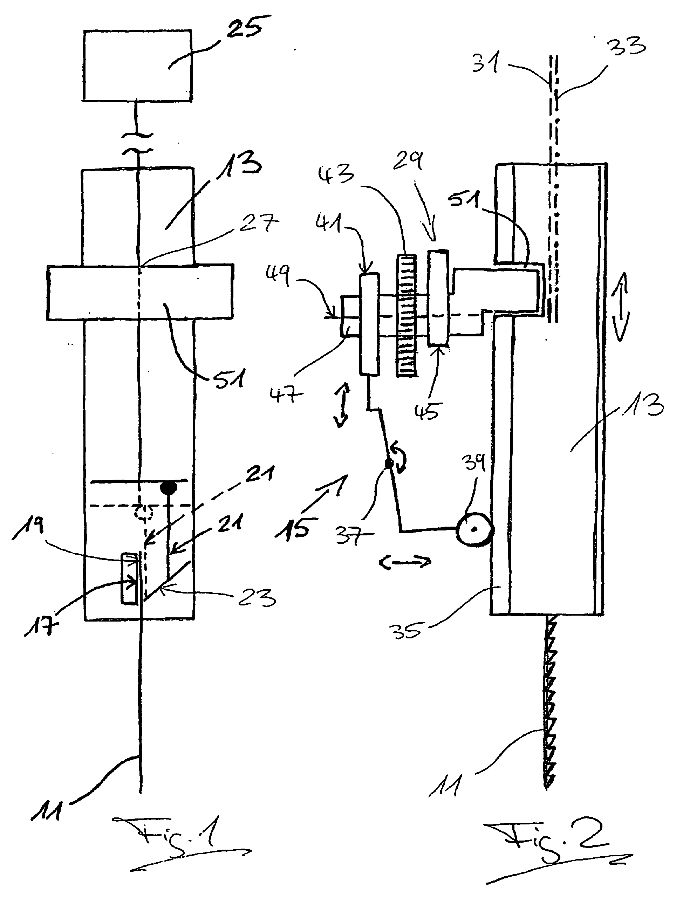

Bei der in der US 2005/0262708 A1 offenbarten Säbelsäge wird gemäß Fig. 1 das Gegengewicht 22 mittels einer Gleitführung 27 in einem spitzen Winkel zur Hubbewegungsrichtung geführt, um so der Stößelbewegung eine periodische Schwenkbewegung aufzuprägen.

In der DE 2 235 862 A ist eine Stichsäge offenbart, bei welcher das Sägeblatt mittels einer Klemmvorrichtung starr am unteren Ende des Stößels angeklemmt ist und der Stößel mittels Gleitführungen in einem Rahmen gelagert ist, welcher seinerseits um eine horizontale Achse verschwenkbar ist. Zum Verschwenken des Rahmens drückt eine angeschrägte Platte des Massenausgleichsmechanismus intermittierend gegen eine am Rahmen angebrachte Rolle.

Aufgabe der Erfindung ist es, die mit einer Stichsäge der eingangs genannten Art erzielbaren Sägeergebnisse weiter zu verbessern.

Die Lösung dieser Aufgabe erfolgt durch die Merkmale des Anspruchs 1.

Erfindungsgemäß ist das Sägeblatt am Stößel fest eingespannt. Weiterhin greift der Pendelerreger erfindungsgemäß am Stößel an, so dass das am Stößel fest eingespannte Sägeblatt ansonsten frei und ungeführt ist. Erfindungsgemäß ist der Stößel zusammen mit dem Sägeblatt um eine Pendelachse verschwenkbar gelagert, wobei der Pendelerreger auf derjenigen Seite der Pendelachse angreift, auf welcher das Sägeblatt eingespannt ist. Erfindungsgemäß ist das Sägeblatt am Stößel fest eingespannt. Es hat sich gezeigt, dass es die hierdurch ermöglichte exakte Führung des Sägeblatts mittels des Stößels ist, die für die beobachtete enorme Verbesserung der Sägeergebnisse verantwortlich ist. Diese Verbesserung zeigt sich auch dann, wenn der Pendelerreger - wie bisher - unmittelbar am Sägeblatt angreift. Gleichwohl wurden noch bessere Sägeergebnisse beobachtet, wenn das Sägeblatt mit Ausnahme des festen Einspannens am Stößel ansonsten vollkommen frei und ungeführt bleibt, so dass gemäß der Erfindung der Pendelerreger am Stößel angreift.

Dies bedeutet eine völlige Abkehr von der Vorgehensweise, das Sägeblatt in seinem unteren Bereich unmittelbar durch wie auch immer geartete Führung- bzw. Stabilisierungsmittel zu beeinflussen und im oberen Bereich lediglich für eine Koppelung zwischen Sägeblatt und Stößel zu sorgen, die in der Lage ist, die Auf- und Abbewegung des Stößels auf das Sägeblatt zu übertragen. Hier ist das Sägeblatt mit Ausnahme des Einspannens am Stößel vollkommen frei und ungeführt. Auf jedwede Mittel zur Führung oder Stabilisierung des Sägeblatts durch direktes Angreifen am Sägeblatt wird damit verzichtet.

Insbesondere wird hierdurch mit der etablierten Vorgehensweise gebrochen, den Pendelerreger unmittelbar am unteren Bereich des Sägeblatts angreifen zu lassen. Hier ist vielmehr vorgesehen, dass der Pendelerreger am Stößel angreift und somit lediglich mittelbar für die gewünschte Pendelbewegung des Sägeblatts sorgt.

Es hat sich in einer für den Fachmann völlig überraschenden, keinesfalls zu erwartenden Weise gezeigt, dass mit diesem lediglich einseitig eingespannten und ansonsten völlig unbeeinflussten Sägeblatt ausgezeichnete Sägeergebnisse erzielt werden können, die alles Bisherige in den Schatten stellen. Es wird vermutet, dass die bislang vorgenommenen Beeinflussungen des Sägeblatts während des Sägens entstehende Fehlausrichtungen des Sägeblatts, die in der Praxis unvermeidbar sind, noch verstärken. Die bisher erfolgten Führungen bzw. Stabilisierungen des Sägeblatts nahmen dem Sägeblatt folglich jede Chance, sich als Reaktion auf die herrschenden Kraftverhältnisse selbst auszurichten. Das erfindungsgemäß lediglich einseitig eingespannte Sägeblatt ist dagegen zu einer solchen Selbstausrichtung in der Lage. Man erklärt sich das ausgezeichnete Sägeverhalten der hier angegebenen Stichsäge mit dem Prinzip, das so genannten "Japan-Sägen" zugrunde liegt, bei denen das Sägeblatt ebenfalls völlig frei und ungeführt ist bzw. sich gewissermaßen selbst überlassen wird. Die Japansägen arbeiten ausschließlich auf Zug. Das Sägeblatt wird hierbei ausschließlich gezogen und läuft damit lediglich nach. Durch diesen Nachlauf ist das Sägeblatt in der Lage, sich selbst gerade zu ziehen bzw. sich selbst optimal auszurichten. Hierdurch wird der Umstand ausgenutzt, dass bei Stichsägen der Sägevorgang während des Aufwärts-Hubs des Sägeblatts erfolgt. Der das Sägeblatt an dessen oberem Ende fest einspannende Stößel zieht das Sägeblatt - wie beim Arbeiten mit einer "Japan-Säge" - durch das Werkstück, d.h. das Sägeblatt läuft lediglich nach. Mit Hilfe des in der üblichen Weise angetriebenen Pendelerregers wird das Sägeblatt dabei nur mittelbar - nämlich über den Stößel, an dem der Pendelerreger angreift - gegen das Werkstück gedrückt. Die Ausnutzung des Prinzips der "Japansäge" ermöglicht es außerdem, relativ dünne Sägeblätter für die erfindungsgemäße Stichsäge zu verwenden. Äußerst dünne Sägeblätter sind eine weitere Besonderheit der Japansägen.

Damit basiert das hier angegebene Prinzip auf dem Gedanken, dass die Nichtbeeinflussung des Sägeblatts im unteren Bereich mit einem festen Halt des Sägeblatts am Stößel korrespondiert. Dieses Prinzip kann deshalb schlagwortartig als "unten frei - oben fest" bezeichnet werden. Während das Sägeblatt im unteren Bereich gewissermaßen sich selbst überlassen bleibt, herrschen im oberen Bereich sozusagen umso klarere Verhältnisse: Das feste Einspannen des Sägeblatts am Stößel bedeutet eine eindeutige und exakte Führung des Sägeblatts mittels des Stößels.

Die beschriebenen Maßnahmen sind weder trivial noch als auf der Hand liegend anzusehen, zumal sie auch mit bestimmten Nachteilen verbunden sind. Das Zusammenwirken des Pendelerregers mit dem Stößel hat aufgrund der Tatsache, dass der Stößel - anders als das Sägeblatt - zumindest teilweise im Inneren der Maschine liegt, zur Folge, dass die durch das Zusammenwirken des Pendelerregers mit dem Stößel unvermeidlich entstehende Wärme zum Teil innerhalb der Maschine anfällt, was bei der Konstruktion der Stichsäge in geeigneter Weise berücksichtigt werden muss. Ferner muss dafür Sorge getragen werden, dass der Verschleiß zwischen Pendelerreger und Stößel nicht zu Beeinträchtigungen führt. Während der durch einen unmittelbar am Sägeblatt angreifenden Pendelerreger bedingte Verschleiß nicht als problematisch angesehen wurde, da die Sägeblätter ohnehin als kurzlebige Verschleißgegenstände galten, ist hier aufgrund des Zusammenwirkens des Pendelerregers mit dem Stößel der hierbei auftretende Verschleiß nunmehr tatsächlich ein Problem, dem entsprechend begegnet werden muss. Allerdings ergibt sich hierbei ein unerwarteter Vorteil, der darin besteht, dass die Lebensdauer der Sägeblätter aufgrund der Tatsache, dass der Pendelerreger nicht mehr unmittelbar an den Sägeblättern angreift, um ein Mehrfaches verlängert ist, wie Versuche ergeben haben. Dies ist darauf zurückzuführen, dass keine immense Wärmeübertragung mehr auf das Sägeblatt erfolgt, wie dies bislang durch das unmittelbare Zusammenwirken zwischen Pendelerreger und Sägeblatt der Fall war.

Ein weiterer Nachteil, der mit dem Angreifen des Pendelerregers am Stößel zusammenhängt, besteht darin, dass die vom Pendelerreger aufzubringenden Kräfte deutlich höher sein müssen, da der Pendelerreger nunmehr in einer geringeren Entfernung zur Schwenkachse des Stößels angreift als bisher.

Gleichwohl führt das hier angegebene Prinzip neben dem besseren Sägeergebnis und dem geringeren Sägeblatt-Verschleiß zu weiteren Vorteilen: Die Ausgestaltung des Pendelerregers kann hier gezielt im Hinblick auf eine optimale Kraftübertragung auf den Stößel und auf eine Minimierung der Reibung erfolgen, da der Pendelerreger keine Führungs- bzw. Stabilisierungsaufgaben mehr zu übernehmen braucht. Ferner ist hier von Vorteil, dass die Verwendung unterschiedlich dicker Sägeblätter keine störenden Umbaumaßnahmen mehr zur Folge hat. Bislang mussten die Einrichtungen zur Führung bzw. Stabilisierung des Sägeblatts umgebaut werden, wenn mit einem Wechsel des Sägeblatts auch eine Änderung der Sägeblatt-Dicke erfolgte. Da hier keine Führungen bzw. Stabilisierungen, die unmittelbar mit dem Sägeblatt zusammenwirken, mehr erforderlich sind, ist es hier außerdem nicht mehr notwendig, eine Halteeinrichtung zur Kopplung des Sägeblatts mit dem Stößel vorzusehen, die bei der herkömmlichen Vorgehensweise exakt zentrisch ausgerichtet werden musste.

Die mit dem hier angegebenen Prinzip verbundenen Vorteile überwiegen die erwähnten Nachteile also bei weitem, zumal diese Nachteile mit sowohl in technischer als auch wirtschaftlicher Hinsicht vertretbarem Aufwand in den Griff zu bekommen sind.

Bevorzugte Weiterbildungen der Erfindung sind auch in den abhängigen Ansprüchen, der Beschreibung sowie der Zeichnung angegeben.

Gemäß einem Ausführungsbeispiel ist eine in den Stößel integrierte Spannvorrichtung vorgesehen, die eine ebene Ausrichtfläche für eine Wange des Sägeblatts und ein Spannorgan umfasst. Auf diese Weise kann der Umstand ausgenutzt werden, dass es sich bei Sägeblättern für Stichsägen in der Regel um Stanzteile handelt, die naturgemäß exakt ebene, hier auch als Wangen bezeichnete Seitenflächen bzw. Flachseiten aufweisen. Wenn das Sägeblatt mit seiner Wange gegen die erfindungsgemäß vorgesehene ebene Ausrichtfläche gedrückt wird, ist das Sägeblatt folglich automatisch exakt entsprechend der Orientierung dieser Ausrichtfläche und gleichzeitig in hohem Maße verdrehsicher ausgerichtet. Durch dieses Einspannen des Sägeblatts zwischen der ebenen Ausrichtfläche und dem Spannorgan ist es insbesondere nicht erforderlich, für das Einspannen des Sägeblatts dessen Schmalseiten zu verwenden, die einen vergleichsweise unexakten Verlauf aufweisen und insbesondere von Sägeblatt zu Sägeblatt variieren, so dass eine exakte Sägeblatt-Ausrichtung und damit eindeutig definierte Führung des Sägeblatts mittels des Stößels nicht realisierbar wäre.

Hierbei ist bevorzugt die Ausrichtfläche stationär und das Spannorgan mittels einer Betätigungseinrichtung relativ zur Ausrichtfläche bewegbar.

Gemäß einer weiteren Ausführungsform ist vorgesehen, dass eine parallel zur Längsachse des Stößels erfolgende Stellbewegung des Spannorgans in eine senkrecht zur Längsachse des Stößels erfolgende Spannbewegung des Spannorgans in Richtung der Ausrichtfläche umsetzbar ist. Hierdurch kann eine für den Benutzer besonders einfache Möglichkeit zur Betätigung der Spannvorrichtung realisiert werden.

Bevorzugt ist zum Umsetzen der Stellbewegung in die Spannbewegung eine mit dem Spannorgan zusammenwirkende Schrägfläche vorgesehen. Eine derartige Ausgestaltung zeichnet sich insbesondere durch ihren einfachen Aufbau und ihre Zuverlässigkeit aus.

Für die Spannvorrichtung kann eine Betätigungseinrichtung vorgesehen sein, die ein für den Benutzer von außen zugängliches, insbesondere an der Oberseite der Stichsäge angeordnetes, Betätigungsorgan sowie eine Übertragungseinrichtung umfasst, über welche die Spannvorrichtung betätigbar ist.

Das Betätigungsorgan kann derart ausgelegt sein, dass eine werkzeuglose Betätigung der Spannvorrichtung möglich ist. Bei dem Betätigungsorgan kann es sich beispielsweise um einen schwenkbaren Spannknopf oder um einen Drehknopf handeln.

Vorzugsweise ist die Übertragungseinrichtung in den Stößel integriert. Wenn, wie in einer bevorzugten Ausführung vorgesehen, auch die Spannvorrichtung in den Stößel integriert ist, wird mit dem erfindungsgemäßen Stößel eine Baueinheit realisiert, die eine Vielzahl von Funktionen in sich vereinigt.

Als Übertragungseinrichtung zwischen Betätigungsorgan einerseits und Spannvorrichtung andererseits kann eine starre Stellmechanik vorgesehen sein. Alternativ oder zusätzlich ist es möglich, die Übertragungseinrichtung mit einer Stellhydraulik zu versehen.

Des Weiteren kann gemäß einem Ausführungsbeispiel vorgesehen sein, dass in wenigstens einer senkrecht zur Längsachse des Stößels verlaufenden Ebene der Stößel einerseits und ein Stößel-Gegengewicht oder zumindest ein Bestandteil einer Gegengewichtsteuerung andererseits einander durchdringen. Hierdurch ist es möglich, den Stößel und das Gegengewicht bzw. die Steuerung des Gegengewichts hinsichtlich der Lage ihrer Schwerpunkte verhältnismäßig nahe beieinander anzuordnen. Dies hat eine vorteilhafte Reduzierung möglicher Kippmomente zur Folge. Als besonders vorteilhaft erweist sich die durch die erfindungsgemäße Durchdringung ermöglichte enge "Nachbarschaft" von Stößel und Gegengewicht/Gegengewichtsteuerung dann, wenn diese Komponenten ein vergleichsweise hohes Gewicht aufweisen. Ein hohes Gewicht ist hinsichtlich der gewünschten exakten Führung des Sägeblatts mittels des Stößels, in den das Sägeblatt mit seinem oberen Bereich eingespannt ist, von Vorteil. Somit kann durch die erfindungsgemäße Durchdringung von Stößel und Gegengewicht/Gegengewichtsteuerung die exakte Führung des Sägeblatts mittels des Stößels weiter verbessert werden.

Unnötiges Gewicht lässt sich ohne Beeinträchtigung der erforderlichen Stabilität einsparen, wenn gemäß einem weiteren Ausführungsbeispiel der Stößel wenigstens teilweise als ein Rohr ausgebildet ist, das zumindest in dem Bereich, an dem der Pendelerreger angreift, mit einer verstärkten Rohrwand versehen ist.

Diese Verstärkung kann mit minimalem Materialeinsatz dadurch erfolgen, dass eine Rohrwand mit nicht konstanter Stärke vorgesehen wird. Insbesondere schlägt die Erfindung vor, dass ein von der Außenwand des Rohres definierter Zylinder und ein von der Innenwand des Rohres definierter Zylinder mit parallel versetzten Mittelachsen exzentrisch zueinander angeordnet sind, wobei die Stärke der Rohrwand an der dem Pendelerreger zugewandten Seite am Größten ist.

Die Erfindung wird im Folgenden beispielhaft unter Bezugnahme auf die Zeichnung beschrieben. Es zeigen:
- Fig. 1 und 2: schematisch verschiedene Ansichten des Stößel-Bereiches einer Stichsäge gemäß einer Ausführungsform der Erfindung.

Auf den grundsätzlichen Aufbau einer Stichsäge sowie einer Pendelhubsteuerung für deren Sägeblatt 11 wird hier nicht näher eingegangen, da dies grundsätzlich bekannt ist.

Fig. 1 zeigt schematisch den Stößel-Bereich der erfindungsgemäßen Stichsäge von vorne oder hinten, d.h. eine Ansicht auf eine Schmalseite des Sägeblatts 11.

Das Sägeblatt 11 ist in seinem unteren Bereich vollkommen frei, d.h. es sind keinerlei Führungs- oder Stabilisierungseinrichtungen vorgesehen, die am unteren Bereich des Sägeblatts unmittelbar angreifen. Ausschließlich der Stößel 13 der Stichsäge steht in unmittelbarem Kontakt mit dem Sägeblatt 11.

Hierbei ist das Sägeblatt 11 fest am Stößel 13 eingespannt, und zwar derart, dass keinerlei Spiel zwischen Sägeblatt 11 und Stößel 13 vorhanden ist und keine Relativbewegungen zwischen Sägeblatt 11 und Stößel 13 möglich sind. Die Einspannung erfolgt insbesondere derart, dass das Sägeblatt 11 weder relativ zum Stößel 13 verkippen noch sich um seine eigene Längsachse relativ zum Stößel 13 verdrehen kann.

In dem dargestellten Ausführungsbeispiel umfasst eine in den Stößel 13 integrierte Spannvorrichtung für das Sägeblatt 11 eine im Stößel 13 stationär angeordnete ebene Ausrichtfläche 17, gegen die das Sägeblatt 11 mit einer seiner herstellungsbedingt exakt ebenen Wangen 19 mittels eines Spannorgans 21 gedrückt werden kann. Das Spannorgan 21 ist vom Benutzer mittels einer Betätigungseinrichtung betätigbar, die ein oberhalb des Stößels 13 an der Oberseite der Stichsäge angeordnetes, von außen für den Benutzer zugängliches und werkzeuglos von Hand bedienbares Betätigungsorgan 25 sowie eine Übertragungseinrichtung 27 umfasst.

Das Betätigungsorgan 25 und die Übertragungseinrichtung 27 wirken derart zusammen, dass Betätigungsbewegungen des Betätigungsorgans 25 zur Betätigung des Spannorgans 21 mittels der Übertragungseinrichtung 27 auf das Spannorgan 21 übertragen werden, dass jedoch das Betätigungsorgan 25 die Auf- und Abbewegung des Stößels 13 während des Sägebetriebs nicht mitmacht. Hierzu ist ein nicht dargestellter Längenausgleich vorgesehen, der die Auf- und Abbewegung des Stößels 13 bei diesbezüglich stationärem Betätigungsorgan 25 ermöglicht. Beispielsweise kann ein nach Art einer Keilwelle ausgebildeter Abschnitt der Übertragungseinrichtung 27 mit einer drehfest am Betätigungsorgan 25 angebrachten Verzahnung zusammenwirken, relativ zu welcher eine Translation des Keilwellenabschnitts ohne Verdrehung desselben möglich ist. Die Betätigung des Spannorgans 21 erfolgt durch Verdrehen des Keilwellenabschnitts über die Verzahnung des Betätigungsorgans 25.

Mittels der Übertragungseinrichtung 27 wird eine Betätigungsbewegung des Betätigungsorgans 25 auf das Spannorgan 21 übertragen. Diese Übertragung kann rein mechanisch über eine Stellmechanik mit einem oder mehreren Stellgliedern erfolgen. Alternativ oder zusätzlich kann ein Hydrauliksystem eingesetzt werden. Ein Hydrauliksystem hat den Vorteil, dass ein aufgrund der jeweiligen Gegebenheiten bzw. Platzverhältnissen besonders aufwendiger Aufbau der zur Kraftübertragung erforderlichen Mechanik vermieden werden kann.

In Fig. 1 ist das Spannorgan 21, das von der Übertragungseinrichtung 27 von oben beaufschlagt wird, mit einer durchgezogenen Linie in einer Freigabeposition dargestellt. In diesem Zustand kann ein Sägeblatt 11 vom Stößel 13 entfernt bzw. am Stößel 13 angebracht werden. Für die Anbringung des Sägeblatts 11 ist eine nicht dargestellte Kopplungseinrichtung vorgesehen, die eine verliersichere, aber noch nicht eingespannte Halterung des Sägeblatts 11 am Stößel 13 ermöglicht. Für das Entfernen eines Sägeblatts 11 kann eine nicht dargestellte Auswurfeinrichtung für das Sägeblatt 11 in den Stößel 13 integriert sein. Eine Betätigung eines solchen Auswerfers kann ebenfalls über das Betätigungsorgan 25 erfolgen.

Um das Sägeblatt 11 am Stößel 13 festzuspannen, wird das Spannorgan 21 durch Betätigen des Betätigungsorgans 25 über die Übertragungseinrichtung nach unten gedrückt. Hierbei wirkt das Spannorgan 21 mit einer Schräge 23 zusammen, die hier als Umlenkorgan dient und dem Spannorgan 21 eine Bewegungskomponente senkrecht zur Längsachse des Stößels 13 in Richtung der Ausrichtfläche 17 verleiht.

In seiner hier gestrichelt dargestellten Endposition wirkt das Spannorgan 21 mit der Ausrichtfläche 17 derart zusammen, dass das Sägeblatt 11 mit seiner ebenen Wange 19 gegen die Ausrichtfläche 17 gedrückt und somit zwischen Ausrichtfläche 17 und Spannorgan 21 fest eingespannt ist.

In der bezüglich Fig. 1 um 90° gedrehten Darstellung gemäß Fig. 2 ist schematisch ein Pendelerreger 15 gezeigt. Der Pendelerreger 15 ist um eine Achse 37 verschwenkbar angebracht. Auf einer Seite der Schwenkachse 37 weist der Pendelerreger 15 an seinem freien Ende ein beispielsweise in Form einer Rolle ausgebildetes Druckstück 39 auf, mit welchem der Pendelerreger 15 an der Rückseite des Stößels 13 angreift.

Auf der anderen Seite der Schwenkachse 37 wirkt der Pendelerreger 15 mit einer insbesondere an einem Exzenter ausgebildeten Steuerkurve 41 zusammen. Die Steuerkurve 41 ist zusammen mit einem Zahnrad 43 sowie einer Steuerkurve 45, die an einem insbesondere ebenfalls als Exzenter ausgebildeten Bestandteil 29 eines Gegengewichts für den Stößel 13 ausgebildet ist, drehfest an einem um eine Achse 49 verdrehbaren Bauteil 47 angebracht. Das Zahnrad 43 ist Bestandteil eines nicht dargestellten Getriebes, über welches von der zentralen Antriebswelle des Motors (nicht dargestellt) der Stichsäge unter anderem das Bauteil 47 in Drehung versetzt wird. Das Bauteil 47 dringt in eine nutartige Quervertiefung 51 des Stößels 13 ein, um nach Art einer Kurbelwelle aufgrund seiner Kröpfung den Stößel 13 auf und ab zu bewegen, wenn das Bauteil 47 um die Achse 49 gedreht wird.

Während der ebenfalls über die zentrale Antriebswelle des Motors gesteuerten und über das Bauteil 47 erzeugten Auf- und Abbewegung des Stößels 13 wird synchron über die Steuerkurven 41, 45 sowohl die der Auf- und Abbewegung des Stößels 13 und somit des Sägeblatts 11 entsprechende Bewegung des nicht dargestellten Stößel-Gegengewichts als auch die für die Pendelbewegung des Stößels 13 sorgende Bewegung des Pendelerregers 15 abgegriffen oder abgeleitet. Der Hubbewegung des Sägeblatts 11 ist somit eine beliebig auf optimale Sägeergebnisse verbesserte Pendelbewegung überlagert. Hierzu ist der Stößel 13 zusammen mit dem Sägeblatt 11 um eine nicht dargestellte Pendelachse verschwenkbar gelagert.

Das in Fig. 2 dargestellte Eindringen des Bauteils 47 in den Stößel 13 symbolisiert die im Einleitungsteil erläuterte Durchdringung zwischen dem Stößel 13 einerseits und dem Stößel-Gegengewicht bzw. der Gegengewichtsteuerung 29 andererseits. Hierdurch wird der Abstand zwischen den Schwerpunkten des Stößels 13 einerseits und der dem Gegengewicht zuzurechnenden Massen andererseits in einer Ebene senkrecht zur Längsachse des Stößels 13 reduziert, d.h. Stößel 13 und Gegengewicht/Gegengewichtsteuerung 29 liegen so eng wie möglich beieinander, um die Größe eventuell auftretender Kippmomente zu minimieren.

Der Stößel 13 ist als Rohr ausgebildet, das eine Rohrwand 35 aufweist, die - in Umfangsrichtung betrachtet - keine konstante Stärke aufweist. Hierzu ist der von der Außenwand des Rohres definierte Zylinder bezüglich des von der Innenwand definierten Zylinders exzentrisch angeordnet, d.h. die Mittelachse 31 der zylindrischen Rohraußenwand und die Mittelachse 33 der zylindrischen Rohrinnenwand sind parallel versetzt zueinander angeordnet. Dieser Versatz ist derart gewählt, dass die Dicke der Rohrwand 35 dort am größten ist, wo der Pendelerreger 15 mit dem Druckstück 39 am Stößel 13 angreift.

### Bezugszeichenliste

- 11: Sägeblatt
- 13: Stößel
- 15: Pendelerreger
- 17: Ausrichtfläche
- 19: Wange des Sägeblatts
- 21: Spannorgan
- 23: Schrägfläche
- 25: Betätigungsorgan
- 27: Übertragungseinrichtung
- 29: Exzenter zur Gegengewichtsteuerung
- 31: Mittelachse der Rohraußenwand
- 33: Mittelachse der Rohrinnenwand
- 35: Rohrwand
- 37: Schwenkachse
- 39: Druckstück
- 41: Steuerkurve für Pendelerreger
- 43: Zahnrad
- 45: Steuerkurve für Gegengewicht
- 47: Bauteil
- 49: Drehachse
- 51: Quervertiefung

## Patentansprüche

1. Stichsäge
mit einem Sägeblatt (11) und einer Pendelhubsteuerung für das Sägeblatt, die einen Stößel (13) für die Hubbewegung und einen Pendelerreger (15) für die Pendelbewegung des Sägeblatts (11) umfasst, wobei das Sägeblatt (11) am Stößel (13) fest eingespannt ist, wobei der Pendelerreger (15) am Stößel (13) angreift, so dass das am Stößel (13) fest eingespannte Sägeblatt (11) ansonsten frei und ungeführt ist, und wobei der Stößel (13) zusammen mit dem Sägeblatt (11) um eine Pendelachse verschwenkbar gelagert ist,
**dadurch gekennzeichnet,**
**dass** der Pendelerreger (15) auf derjenigen Seite der Pendelachse angreift, auf welcher das Sägeblatt (11) eingespannt ist.

2. Stichsäge nach Anspruch 1,
**dadurch gekennzeichnet,**
**dass** eine in den Stößel (13) integrierte Spannvorrichtung vorgesehen ist, die eine ebene Ausrichtfläche (17) für eine Wange (19) des Sägeblatts (11) und ein Spannorgan (21) umfasst.

3. Stichsäge nach Anspruch 2,
**dadurch gekennzeichnet,**
**dass** die Ausrichtfläche (17) stationär und das Spannorgan (21) mittels einer Betätigungseinrichtung (25, 27) relativ zur Ausrichtfläche (17) bewegbar ist.

4. Stichsäge nach Anspruch 2 oder 3,
**dadurch gekennzeichnet,**
**dass** eine parallel zur Längsachse des Stößels (13) erfolgende Stellbewegung des Spannorgans (21) in eine senkrecht zur Längsachse des Stößels (13) erfolgende Spannbewegung des Spannorgans (21) in Richtung der Ausrichtfläche (17) umsetzbar ist.

5. Stichsäge nach Anspruch 4,
**dadurch gekennzeichnet,**
**dass** zum Umsetzen der Stellbewegung in die Spannbewegung eine mit dem Spannorgan (21) zusammenwirkende Schrägfläche (23) vorgesehen ist.

6. Stichsäge nach einem der Ansprüche 2 bis 5,
**dadurch gekennzeichnet,**
**dass** eine Betätigungseinrichtung ein für einen Benutzer von außen zugängliches, insbesondere an der Oberseite der Stichsäge angeordnetes, Betätigungsorgan (25) sowie eine Übertragungseinrichtung (27) umfasst, über welche die Spannvorrichtung betätigbar ist.

7. Stichsäge nach Anspruch 6,
**dadurch gekennzeichnet,**
**dass** die Übertragungseinrichtung (27) in den Stößel (13) integriert ist.

8. Stichsäge nach Anspruch 6 oder 7,
**dadurch gekennzeichnet,**
**dass** die Übertragungseinrichtung (27) eine starre Stellmechanik umfasst.

9. Stichsäge nach einem der Ansprüche 6 bis 8,
**dadurch gekennzeichnet,**
**dass** die Übertragungseinrichtung (27) eine Stellhydraulik umfasst.

10. Stichsäge nach einem der vorhergehenden Ansprüche,
**dadurch gekennzeichnet,**
**dass** in wenigstens einer senkrecht zur Längsachse des Stößels (13) verlaufenden Ebene der Stößel (13) einerseits und ein Stößel-Gegengewicht oder zumindest ein Bestandteil (29) einer Gegengewichtsteuerung andererseits einander durchdringen.

11. Stichsäge nach einem der vorhergehenden Ansprüche,
**dadurch gekennzeichnet,**
**dass** der Stößel (13) wenigstens teilweise als Rohr ausgebildet ist, das zumindest in dem Bereich, an dem der Pendelerreger (15) angreift, mit einer verstärkten Rohrwand (35) versehen ist.

12. Stichsäge nach Anspruch 11,
**dadurch gekennzeichnet,**
**dass** ein von der Außenwand des Rohres definierter Zylinder und ein von der Innenwand des Rohres definierter Zylinder mit parallel versetzten Mittelachsen (31, 33) exzentrisch zueinander angeordnet sind, wobei die Stärke der Rohrwand (35) an der dem Pendelerreger (15) zugewandten Seite am größten ist.

## Claims

1. A jig saw
having a saw blade (11) and a pendulum stroke control for the saw blade which includes a plunger (13) for the stroke movement and a pendulum activator (15) for the pendular motion of the saw blade (11),
wherein the saw blade (11) is fixedly clamped at the plunger (13), wherein the pendulum activator (15) engages at the plunger (13) so that the saw blade fixedly clamped at the plunger (13) is otherwise free and unguided and wherein the plunger (13) is pivotably supported about a pendulum axis together with the saw blade (11),
**characterised in that**
the pendulum activator (15) engages at that side of the pendulum axis on which the saw blade (11) is clamped.

2. A jig saw in accordance with claim 1,
**characterised in that**
a clamping apparatus is provided which is integrated into the plunger (13) and which includes a planar alignment surface (17) for a cheek (19) of the saw blade (11) and a clamping member (21).

3. A jig saw in accordance with claim 2,
**characterised in that**
the alignment surface (17) is stationary and the clamping member (21) is movable relative to the alignment surface (17) by means of an actuating device (25, 27).

4. A jig saw in accordance with claim 2 or claim 3,
**characterised in that**
an actuation of the clamping member (21) taking place in parallel to the longitudinal axis of the plunger (13) can be converted into a clamping movement of the clamping member (21) in the direction of the alignment surface (17) taking place perpendicular to the longitudinal axis of the plunger (13).

5. A jig saw in accordance with claim 4,
**characterised in that**
a slanted surface (23) cooperating with the clamping member (21) is provided to convert the actuation into the clamping movement.

6. A jig saw in accordance with any one of the claims 2 to 5,
**characterised in that**
an actuation device includes an actuation member (25) which is accessible from outside for a user and is in particular arranged at the upper side of the jig saw and includes a transfer device (27) via which the clamping apparatus can be actuated.

7. A jig saw in accordance with claim 6,
**characterised in that**
the transfer device (27) is integrated into the plunger (13).

8. A jig saw in accordance with claim 6 or claim 7,
**characterised in that**
the transfer device (27) includes a rigid actuation mechanism.

9. A jig saw in accordance with any one of the claims 6 to 8,
**characterised in that**
the transfer device (27) includes a hydraulic actuation mechanism.

10. A jig saw in accordance with any one of the preceding claims,
**characterised in that**
the plunger (13), on the one hand, and a plunger counterweight or at least a component (29) of a counterweight control, on the other hand, pass through one another in at least one plane extending perpendicular to the longitudinal axis of the plunger (13).

11. A jig saw in accordance with any one of the preceding claims,
**characterised in that**
the plunger (13) is configured at least partly as a tube which is provided with a reinforced tube wall (35) at least in the region at which the pendulum actuator (15) engages.

12. A jig saw in accordance with claim 11,
**characterised in that**
a cylinder defined by the outer wall of the tube and a cylinder defined by the inner wall of the tube are arranged eccentrically to one another with centre axes (31, 33) displaced in parallel, with the thickness of the tube wall (35) being the largest at the side facing the pendulum actuator (15).

## Revendications

1. Scie sauteuse
comprenant une lame de scie (11) et une commande de course en va-et-vient pendulaire pour la lame de scie, qui comprend un poussoir (13) pour le mouvement en va-et-vient et un excitateur pendulaire (15) pour le mouvement pendulaire de la lame de scie (11), dans laquelle la lame de scie (11) est fermement enserrée sur le poussoir (13), ledit excitateur pendulaire (15) attaquant le poussoir (13), de sorte que la lame de scie (11) fermement enserrée sur le poussoir (13) est par ailleurs libre et non guidée, et dans laquelle le poussoir (13) est monté conjointement avec la lame de scie (11) avec faculté de basculement autour d'un axe pendulaire,
**caractérisée en ce que** l'excitateur pendulaire (15) attaque sur le côté de l'axe pendulaire sur lequel la lame de scie (11) est enserrée.

2. Scie sauteuse selon la revendication 1,
**caractérisée en ce qu'**il est prévu un dispositif de serrage intégré dans le poussoir (13), qui comprend une surface d'orientation plane (17) pour un côté (19) de la lame de scie (11) et un organe de serrage (21).

3. Scie sauteuse selon la revendication 2,
**caractérisée en ce que** la surface d'orientation (17) est stationnaire et l'organe de serrage (21) est déplaçable par rapport à la surface d'orientation (17) au moyen d'un système d'actionnement (25, 27).

4. Scie sauteuse selon la revendication 2 ou 3,
**caractérisée en ce qu'**un mouvement d'approche de l'organe de serrage (21) qui se produit parallèlement à l'axe longitudinal du poussoir (13) est converti en un mouvement de serrage, qui se produit perpendiculairement à l'axe longitudinal du poussoir (13), de l'organe de serrage (21) en direction de la surface d'orientation (17).

5. Scie sauteuse selon la revendication 4,
**caractérisée en ce que** pour la conversion du mouvement d'approche en un mouvement de serrage, il est prévu une surface oblique (23) qui coopère avec l'organe de serrage (21).

6. Scie sauteuse selon l'une des revendications 2 à 5,
**caractérisée en ce qu'**un système d'actionnement comprend un organe d'actionnement (25) accessible de l'extérieur pour un utilisateur, en particulier agencé sur la face supérieure de la scie sauteuse, ainsi qu'un système de transmission (27) au moyen duquel le dispositif de serrage peut être actionné.

7. Scie sauteuse selon la revendication 6,
**caractérisée en ce que** le système de transmission (27) est intégré dans le poussoir (13).

8. Scie sauteuse selon la revendication 6 ou 7,
**caractérisée en ce que** le système de transmission (27) comprend un mécanisme d'approche rigide.

9. Scie sauteuse selon l'une des revendications 6 à 8,
**caractérisée en ce que** le système de transmission (27) comprend un système d'approche hydraulique.

10. Scie sauteuse selon l'une des revendications précédentes,
**caractérisée en ce que** dans au moins un plan s'étendant perpendiculairement à l'axe longitudinal du poussoir (13), le poussoir (13) d'une part et un contrepoids du poussoir ou au moins un composant (29) d'une commande à contrepoids d'autre part, se traversent mutuellement.

11. Scie sauteuse selon l'une des revendications précédentes,
**caractérisée en ce que** le poussoir (13) est réalisé au moins partiellement comme un tube qui est doté d'une paroi de tube renforcée (35) au moins dans la région dans laquelle l'excitateur pendulaire (15) attaque.

12. Scie sauteuse selon la revendication 11,
**caractérisée en ce qu'**un cylindre défini par la paroi extérieure du tube et un cylindre défini par la paroi intérieure du tube sont agencés de façon excentrique l'un par rapport à l'autre avec des axes médians (31, 33) décalés en parallèle, et l'épaisseur de la paroi du tube (35) est la plus grande sur le côté tourné vers l'excitateur pendulaire (15).
